# EUROPEAN PATENT APPLICATION

(11) **EP 2 075 585 A1**
(43) Date of publication of application: **01.07.2009**
(21) Application number: 07807798.9
(22) Date of filing: 22.09.2007
(51) Int. Cl.: G01N 35/08, G01N 33/53, G01N 33/566, G01N 37/00

(54) **MICROCHIP REACTION DETECTION SYSTEM, AND METHOD OF REACTION OF MICROCHIP IN FLOW PATH**

(30) Priority: 18.10.2006 JP 2006283542
(71) Applicant: Konica Minolta Medical & Graphic, Inc., Tokyo 191-8511 (JP)
(72) Inventor: SANDO, Yasuhiro, Hino-shi Tokyo 1918511 (JP); NAKAJIMA, Akihisa, Hino-shi Tokyo 1918511 (JP); HIGASHINO, Kusunoki, Hino-shi Tokyo 1918511 (JP); AOKI, Youichi, Hino-shi Tokyo 1918511 (JP)
(74) Representative: Roberts, Mark Peter
(86) International application number: PCT/JP2007/068469
(87) International publication number: WO 2008/047533

(57) **Abstract**

Disclosed is a microchip reaction detection system comprising: a microchip comprising a driving liquid injection unit into which a driving liquid for driving a solution is injected and a detection unit on which a substance to be reacted is supported and where the reaction between the substance and the solution is detected; a driving liquid pump for injecting the driving liquid into the driving liquid injection unit; an air pump for injecting a gas into the detection unit; and a control unit for controlling the driving liquid pump so that the driving liquid can be injected into the driving liquid injection unit and also controlling the air pump so that the gas can be injected into the detection unit intermittently in an amount at least effective for pushing away the solution injected in the detection unit while feeding the solution to the detection unit.

## Description

### TECHNICAL FIELD

The present invention relates to microchip reaction detection systems, and to methods of detecting the reactions of microchips in the flow path.

### BACKGROUND TECHNOLOGY

In recent years, by utilizing micromachining technology and ultra fine machining technology, systems have been developed in which the apparatuses and instruments (for example, pumps, valves, flow paths, sensors, etc.,) for carrying out chemical analysis, chemical synthesis, etc., are miniaturized and integrated on a single chip (see, for example, Patent Document 1). These are also called µ-TAS (Micro Total Analysis Systems), bio reactors, Lab-on-chips, or biochips, and their applications are expected in the fields of medical examination and diagnosis, environmental measurements, and agricultural manufacturing. In reality, as can be seen in gene testing, when complex processes, skilled manipulation, and operation of equipment and instruments are necessary, it can be said that the benefits are high for a micro-miniaturized chemical analysis system that has been automated, is high-speed, and has been simplified because it makes analysis possible without demanding a high cost, necessary quantities of samples, and the required analysis time, but also is not limited to a specific analysis environment or time.

In various types of analyses and examinations, the quantitative nature of analysis, the accuracy of analysis, and economy, etc., of these chips for analysis (hereinafter, a chip such as the above inside which is provided a fine flow path, and various types of reactions are carried out inside the fine flow paths are called "microchips") are considered important. Because of this, the problem is to establish a liquid flow system having a simple configuration and high reliability, and while micro fluid control devices with high accuracy and superior reliability are required, micro pump systems and methods of their control that are ideally suitable for these have been proposed (Patent Documents 2 to 4).

Microchips are being used for the amplification and detection of a specific gene in a sample. In such microchips, there are cases in which a reacting substance is supported in advance on the flow path wall surface of the detection unit inside the chip, and by making a plurality of fluids such as reagents flow through this flow path in succession, reactions are carried out by making the supported reacting substance come into contact with these fluids in succession.

Patent Document 1: Japanese Unexamined Patent Application Publication No. 2004-28589.

Patent Document 2: Japanese Unexamined Patent Application Publication No. 2001-322099.

Patent Document 3: Japanese Unexamined Patent Application Publication No. 2004-108285.

Patent Document 4: Japanese Unexamined Patent Application Publication No. 2004-270537.

### DISCLOSURE OF THE INVENTION

### PROBLEMS TO BE SOLVED BY THE INVENTION

However, in a fine flow path of a microchip, a gradient of solution flow is generated in a direction perpendicular to the flow path, and the speed becomes small near the wall surface of the flow path. Further, in the vicinity near the wall surface of the flow path, the speed of the solution effectively becomes 0. Because of this, in a case such as the above in which reactions are carried out by passing solutions through a flow path on the wall surface of which is supported a reacting substance, even if a solution is passed through that flow path, the solution stagnates in the vicinity of the wall surface and there will be no flow. In other words, it becomes difficult to supply a new solution to the reacting substance such as amplified genes supported on the wall of the flow path, and the reaction will not be promoted. Further, even in the case of carrying out reactions by feeding successively different solutions to that flow path, if different solutions such as various reagents are made to flow in succession, there is the problem that the previous solution remains on the wall surface, and the reaction will not progress because the old solution is not replaced by the new solution.

The present invention was made in view of the above problem, and the purpose of the present invention is to provide a microchip reaction detection system in which it is possible to speed up the progress of a reaction by making a solution flow efficiently with respect to the reacting substance supported on the wall of the flow path of the detection unit, and to provide a reaction method inside the flow path of the microchip.

### MEANS FOR SOLVING THE PROBLEMS

The purpose of the present invention can be achieved by the following configuration.
1. A microchip reaction detection system with the feature that it comprises: a microchip comprising a driving liquid injection unit into which a driving liquid for driving a solution is injected and a detection unit on which a reacting substance is supported and in which the reaction between said reacting substance and said solution is detected; a driving liquid pump for injecting said driving liquid into said driving liquid injection unit; an air pump for injecting a gas into the detection unit; a control unit for controlling said driving liquid pump so that said driving liquid can be injected into said driving liquid injection unit and also controlling said air pump so that said gas can be injected into said detection unit intermittently of at least an amount effective for pushing away said solution injected into said detection unit while feeding said solution to said detection unit.
2. A microchip reaction detection system according to item 1 above with the feature that said microchip has in the detection unit a flow path for injecting said gas which flow path joins the flow path for feeding said solution.
3. A method of reaction inside the flow path of a microchip that causes a reaction by feeding a solution to the wall of the flow path supporting a reacting substance in the detection unit thereby making said reacting substance come into contact with said solution, wherein, at the time of causing said reaction, said solution and a gas of at least an amount effective for pushing out the solution injected into said detection unit are alternatively injected into said detection unit.
4. A method of reaction inside the flow path of a microchip according to item 3 above with the feature that the reaction between said reacting substance and said solution is an avidin-biotin reaction.
5. A method of reaction inside the flow path of a microchip according to item 3 above with the feature that the reaction between said reacting substance and said solution is a hybridization reaction.
6. A method of reaction inside the flow path of a microchip according to item 3 above with the feature that the reaction between said reacting substance and said solution is an antigen antibody reaction.

### EFFECT OF THE INVENTION

According to the present invention, since the feeding of liquid-gas-liquid-gas is done to the detection unit in that sequence, and since solutions come into contact with the reacting substance supported on the wall of the flow path of the detection unit intermittently, it is possible to speed up the progress of the reaction.

### BRIEF DESCRIPTION OF THE DRAWINGS

Figure 1 is an outline diagram of a reaction detection apparatus 80 according to a preferred embodiment of the present invention.
Figure 2 is an explanatory diagram of a microchip 1 according to a preferred embodiment of the present invention.
Figure 3 is an explanatory diagram for explaining the condition when a gas 40 of an amount enough for pushing out a solution 41 injected into the detection unit 111 is alternatively injected into said reaction unit.
Figure 4 is an explanatory diagram showing an example of the internal construction of a reaction detection apparatus 80 according to a preferred embodiment of the present invention.
Figure 5 is an explanatory diagram showing an example of the construction of a driving liquid pump 5 according to a preferred embodiment of the present invention.
Figure 6 is a circuit block diagram of a reaction detection apparatus 80 according to a preferred embodiment of the present invention.
Figure 7 is a flow chart explaining the procedure of testing using a reaction detection apparatus 80 according to a preferred embodiment of the present invention.
Figure 8 is a flow chart of an intermittent injection subroutine for alternatively injecting a gas 40 and a solution 41 into the detection unit 111.

### EXPLANATION OF SYMBOLS

1 Microchip
3 Temperature adjusting unit
4 Optical detection unit
5 Pump
6 Packing
10 Driving liquid tank
11 Driving liquid
35 Air pump
37 Solenoid valve
62 Micro pump
80 Reaction detection apparatus
82 Chassis
83 Insertion inlet
84 Display unit
110 Driving liquid injection unit
111 Detection unit
130 Ultra fine flow path
113 Unit for injecting specimen that is under examination

### DETAILED DESCRIPTION OF THE PREFERRED EMBODIMENTS

In the following, some preferred embodiments of the present invention are explained with reference to the drawings.

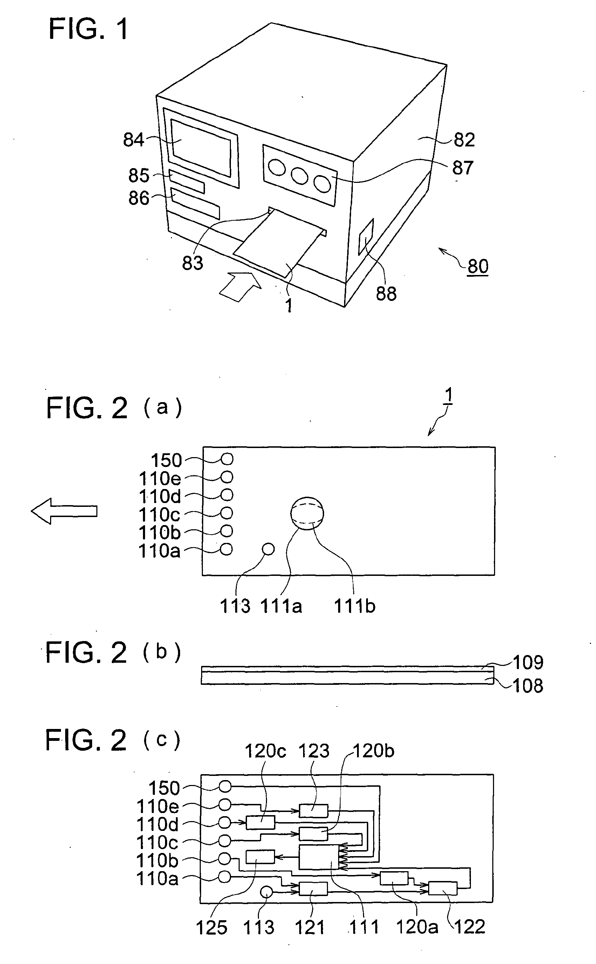

Figure 1 is an outline diagram of a reaction detection apparatus 80 according to a preferred embodiment of the present invention.

The reaction detection apparatus 80 is an apparatus that automatically detects the reaction between the specimen under examination that has been injected in advance into the microchip 1 and a reagent, and displays the results in the display unit 84.

An insertion inlet 83 is present in the chassis 82 of the reaction detection apparatus 80, and the microchip 1 is set inside the chassis 82 by inserting it in the insertion inlet 83. Further, the insertion inlet 83 has a height that is sufficiently more than the thickness of the microchip 1 so that the microchip 1 does not come into contact with the insertion inlet 83 when it is inserted. The symbol 85 is a memory card slot, 86 is a printer output outlet, 87 is an operation panel, and 88 are the input/output pins.

The person in charge of testing inserts the microchip 1 in the direction of the arrow shown in Figure 1, and starts the test by operating the operation panel 87. Inside the reaction detection apparatus 80, the testing of the reaction inside the microchip 1 is carried out automatically, and when the testing ends, the results are displayed on the display unit 84 configured using an LCD panel, etc. According to operations in the operation panel 87, the test results can either be printed out via the print outlet 86, or can be stored in a memory card inserted in the memory card slot 85. Further, the data can be stored in a PC, etc., via the external input/output pins 88 using, for example, a LAN cable.

The person in charge of testing, after the testing has ended, takes out the microchip 1 from the insertion inlet 83.

Next, an example of the microchip 1 according to a preferred embodiment of the present invention is explained referring to Figure 2.

Figures 2(a) and 2(b) are external view diagrams of a microchip 1. The arrow mark in Figure 2(a) is the direction of inserting the microchip 1 in the reaction detection apparatus 80 to be described later, and Figure 2(a) is showing the surface that becomes the bottom surface of the microchip 1 at the time it is inserted. Figure 2(b) is a side view diagram of the microchip 1.

The window 111a of the detection unit and the flow path 111b of the detection unit of Figure 2(a) have been provided for optically detecting the reaction between the specimen under examination and the reagent, and are made of a transparent material such as glass, or plastic. 110a, 110b, 110c, 110d, and 110e are driving liquid injection units that are connected to the internal fine flow paths, and inject driving liquids from each of the driving liquid injection units 110 and drive the internal reagents, etc. 150 is the gas injection unit that is connected to the internal fine flow path, and gas is injected into the internal fine flow path from the gas injection unit 150. 113 is an injection unit for the specimen under examination that injects the specimen under examination into the microchip 1.

As is shown in Figure 2(b), the microchip 1 is configured from a grooved substrate 108 and a covering substrate 109 that covers the grooved substrate 108.

The materials used for the grooved substrate 108 and the covering substrate 109 that configure the microchip 1 are explained here.

It is desirable that the microchip 1 is superior in machining formability, non-water absorbency, chemical resistance, weather resistance, cost, etc., and the material of the microchip 1 is selected considering the structure, usage, and detection method, etc., of the microchip 1. As such materials, it is possible to use various materials that are conventionally known, and normally the substrate and the flow path elements are formed by appropriately combining one or more materials according to the individual material characteristics.

In particular, it is desirable that a chip is disposable if it is targeting various types of measured specimens , above all, clinical specimens that have risks of contamination or contagion. Therefore, desirable plastics are ones that can be mass manufactured, are lightweight and strong against shock, and are easy to dispose of by burning, for example, polystyrene which has excellent transparency, mechanical characteristics moldability, and easy micro machinability. Further, for example, when it is necessary to heat the chip during analysis to near 100 °C, it is desirable to use a plastic material (for example, polycarbonate) that is superior in the ability to withstand heat. In addition, when the adhesion of proteins becomes a problem, it is desirable to use polypropylene. Plastics and glass have small thermal conductivity, and by using these materials in regions of the microchip which are locally heated, it is possible to suppress heat transmission in the surface direction, and to heat the area to be heated selectively.

In the present preferred embodiment, in the detection unit 111, since the detection of products of color change reaction or fluorescent materials is done optically, it is necessary to make the substrate, at least in these parts, transparent using an optically transparent material (for example, alkali glass, quartz glass, transparent plastics, etc.) so that light is allowed to pass through. In the present preferred embodiment, the detection unit 111 is made transparent to light by using a light transmitting material for the grooved substrate in which the window 111a of the detection unit and at least the flow path 111b of the detection unit are formed.

In the microchip 1 according to a preferred embodiment of the present invention, in order to carry out testing, specimen processing, etc., fine groove shaped flow paths (fine flow paths) and functional components (flow path elements) have been placed in appropriate forms according to the application. An example of processing in the present preferred embodiment for carrying out the specific gene amplification and their detection carried out using these fine flow paths and flow path elements inside the microchip 1 is explained here referring to Figure 2(c). However, the application of the present invention is not restricted to the example of the microchip explained using Figure 2(c), and can be applied to microchips 1 for various applications.

Figure 2(c) is an explanatory diagram for explaining the functions of the fine flow path and flow path elements inside a microchip 1.

In the fine flow path are provided, for example, a storage unit 121 for the specimen under examination which stores the specimen under examination, a reagent storage unit 120 for storing the reagent, etc., and, so that testing can be done speedily without requiring a specific place or time, the necessary varieties of reagents, cleaning liquid, denaturization processing liquid, etc., are stored in advance in the reagent storage unit 120. In Figure 2(c), the reagent storage unit 120, the storage unit 121 for the specimen under examination, the flow path elements shown by rectangles, and the fine flow paths between them are shown by continuous lines and arrows.

The microchip 1 is configured from a grooved substrate 108 in which are formed fine flow paths and a covering substrate 109 that covers the groove shaped flow paths. The fine flow paths are formed with micrometer order dimensions, and, for example, the width is from several µm to several hundreds of µm, desirably, 10 to 200 µm, depth are from about 25 to 500 µm, and desirably, 25 to 250 µm.

The above fine flow paths are formed at least in the grooved substrate 108 of the microchip 1. It is necessary that the covering substrate 109 covers by coming in close contact with at least the fine flow paths of the grooved substrate, and desirably should cover the entire grooved substrate. Further, in the fine flow paths of the microchip 1 are provided parts for controlling the flow of the liquids such as, for example, flow control units not shown in the figure, reverse flow prevention units (reverse flow prevention valves, active valves, etc.,), etc., so that reverse flow is prevented, and the liquid flow is carried out in a prescribed sequence.

The injection unit 113 for the specimen under examination is an injection unit for injecting the specimen under examination into the microchip 1, and the driving liquid injection unit 110 is an injection unit for injecting the driving liquid 11 into the microchip 1. Before carrying out testing using the microchip 1, the person in charge of testing injects the specimen under examination using a syringe, etc., via the injection unit 113 for the specimen under examination. As is shown in Figure 2(c), the specimen under examination injected from the injection unit 113 for the specimen under examination passes through the connected fine flow paths and is stored in the storage unit 121 for the specimen under examination.

Next, when the driving liquid 11 is injected from the driving liquid injection unit 110a, the driving liquid 11 passes through the connected fine flow path and pushes out the specimen under examination stored in the storage unit 121 for the specimen under examination, and feeds the specimen under examination into the amplification unit 122.

On the other hand, the driving liquid 11 injected from the driving liquid injection unit 110b pushes out the reagent stored in the reagent storage unit 120a via the connected fine flow path. The reagent pushed out from the reagent storage unit 120a is fed to the amplification unit 122 by the driving liquid 11. Depending on the reaction conditions at this time, it is necessary to take the amplification unit 122 to a prescribed temperature, and as described later, the reaction is made at the prescribed temperature by heating or heat absorption inside the reaction detection apparatus 80.

After the prescribed reaction time, a solution 41a that includes the specimen under examination after reaction and fed from the amplification unit 122 by an additional driving liquid 11 is injected into the detection unit 111. The injected solution 41a reacts with the reacting substance supported on the wall of the flow path of the detection unit 111 and gets fixed on the wall of the flow path.

On the other hand, during that period, a gas 40 such as air of a quantity sufficient to push out the solution 41a injected into the detection unit 111 is injected into the detection unit 111 from the gas injection unit 150 at prescribed time intervals. As a consequence, the gas 40 pushes out the solution 41a injected into the detection unit 111 to the waste liquid storage unit 125, and the detection unit 111 temporarily becomes empty. When the injection of gas 40 is completed, a fresh solution 41a, which includes the specimen under examination after reaction, is injected into the detection unit 111 by the driving liquid 11. The fresh liquid 41a that has been injected reacts with the reacting substance supported on the wall of the flow path of the detection unit 111 and gets fixed on the wall of the flow path. By carrying out processing in this manner, since fresh solutions 41a are injected successively into the detection unit 111, it is possible to speed up the progress of the reaction with the reacting substance supported on the wall of the flow path.

In the present preferred embodiment, the reagent a is a primer modified by a biotin, carries out gene amplification of the specimen under examination in the amplification unit 122, and a specimen under examination after reaction in which the amplified genes are converted to single chains by denaturalization processing is fed to the detection unit 111. A biotin-affine protein such as streptavidin, etc., is supported and is fixed on the wall of the flow path of the detection unit 111 in advance as the reacting substance. When the specimen under examination after reaction in the amplification unit 122 flows into the detection unit 111, because of a coupling reaction between the biotin-affine protein and biotin, the genes in the specimen under examination are fixed on the wall of the flow path of the detection unit 111. Said coupling reaction between biotin-affine protein and biotin is a publicly known avidin-biotin reaction.

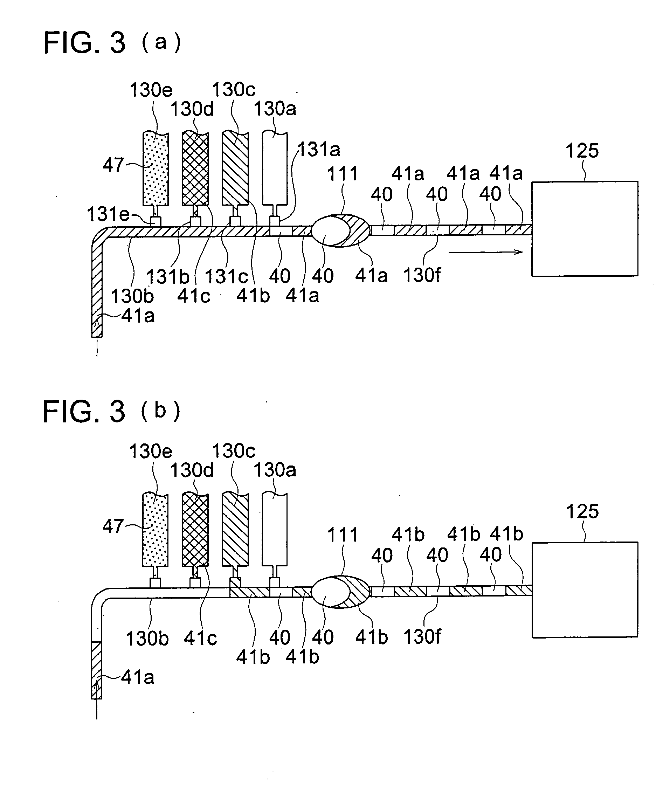

Figure 3 is an explanatory diagram for explaining the condition when a solution 41a injected into the detection unit 111 and a gas 40 of an amount enough for pushing out said solution 41a are alternatively injected into said detection unit 111. Here, 130a is the fine flow path from the gas injection unit 150. Further, 130b, 130c, 130d, and 130e are the fine flow paths, respectively, from the amplification unit 122, the reagent storage unit 120b, the reagent storage unit 120c, and the cleaning liquid storage unit 123. A fine flow path 130f is connected between the outlet of the detection unit 111 and the waste liquid storage unit 125. Water repellent valves 131a, 131c, 131b, and 131e are provided respectively at the locations where the fine flow paths 130a, 130c, 130d, and 130e join the fine flow path 130b. Since a gas such as air is present at the parts of the water repellent valves 131, the solution 41a will never get mixed with other solutions.

To begin with, explanation is given about Figure 3(a). The solution 41a which includes the specimen under examination and which is fed after reaction from the amplification unit 122 is passed through the fine flow path 130b and is injected in the direction of the arrow into the detection unit 111. When the inside of the detection unit 111 is full of the solution 41a, gas 40 is injected from the fine flow path 130a at prescribed time intervals. As a result, gas 40 pushes out the solution 41a to the waste liquid storage unit 125, and the detection unit 111 becomes temporarily empty. When the injection of gas 40 ends, a fresh solution 41b which includes the specimen under examination after reaction is injected by the driving liquid 11 into the detection unit 111. In other words, while the solution 41a is being driven by the driving liquid 11, an amount of gas necessary to push out the solution 41a injected into the detection unit 111 is injected intermittently. By doing so in this manner, as is shown in Figure 3(a), gas 40-solution 41a-gas 40-solution 41a are successively injected in that sequence into the detection unit 111 and discharged to the waste liquid storage unit 125 via the fine flow path 130f. The injected fresh solution 41a reacts with the reacting substance that is supported on the wall of the flow path of the detection unit 111 and the genes in the specimen under examination are fixed on the wall of the flow path. By doing so in this manner, since successively fresh solutions 41a are injected into the detection unit 111 intermittently while replacing each other, it is possible to speed up the progress of the reaction between the reacting substance that is supported on the wall of the flow path and the genes of the specimen under examination.

After carrying out the reaction between the reacting substance and the solution 41a in the detection unit 111, next a reaction is caused after injecting reagent b into the detection unit 111. This operation is explained referring to Figure 3(b).

Before injecting reagent b, as is shown in Figure 3(b), sufficient gas 40 is fed from the fine flow path 130a thereby making the solution 41a recede inside the fine flow path 130b in a direction opposite to that of the arrow.

Next, when the driving liquid 11 is injected from the driving liquid injection unit 110c, the driving liquid 11 passes through the connected flow path and pushes out the reagent b stored in the reagent storage unit 120b, and injects the solution 41b which is the reagent b into the detection unit 111 via the fine flow path 130c.

On the other hand, during that period a gas 40 such as air of at least an amount necessary to push out the solution 41b injected into the detection unit 111 is intermittently injected from the gas injection unit 150 into the detection unit 111 at prescribed intervals of time. As a result, gas 40 pushes out the solution 41b to the waste liquid storage unit 125, and the detection unit 111 becomes temporarily empty. When the injection of gas 40 ends, a fresh solution 41b, which includes the specimen under examination after reaction, is injected into the detection unit 111 by the driving liquid 11. The injected fresh solution 41b reacts with the reacting substance that is supported on the wall of the flow path of the detection unit 111 and the reacting substance included in the solution 41b is fixed on the wall of the flow path. By doing so in this manner, since successively fresh solutions 41b are injected into the detection unit 111 intermittently while replacing each other, it is possible to speed up the progress of the reaction between the reacting substance that is supported on the wall of the flow path and the reacting substance that is included in the solution 41b.

In the present preferred embodiment, solution b is a probe DNA whose ends are fluorescently labeled by FITC, and is hybridized with the genes fixed on the wall of the flow path of the detection unit 111 by injecting reagent b into the detection unit 111. This method is a well known hybridization reaction.

After carrying out the reaction between the reacting substance in the detection unit 111 and the solution 41b in this manner, in a similar manner, reagent c is injected into the detection unit 111 alternating with a gas 40 from the fine flow path 130d and reacted.

In the present preferred embodiment, reagent c is a surface modified gold colloid liquid which is an anti-FITC antibody that links specifically, and the FITC modified probe fixed on the surface of the wall of the flow path of the detection unit 111 by injecting the reagent c into the detection unit 111 causes adhesion of the gold colloid to the hybridized gene. This method is a well known antigen antibody reaction.

Finally, in a similar procedure, a cleaning liquid 47 is injected into the detection unit 111 via the fine flow path 130e thereby cleaning the unreacted solution 41 remaining in the detection unit 111.

After cleaning, the amplified gene is detected by optically measuring the density of the gold colloid adhered to the flow path wall of the detection unit 111.

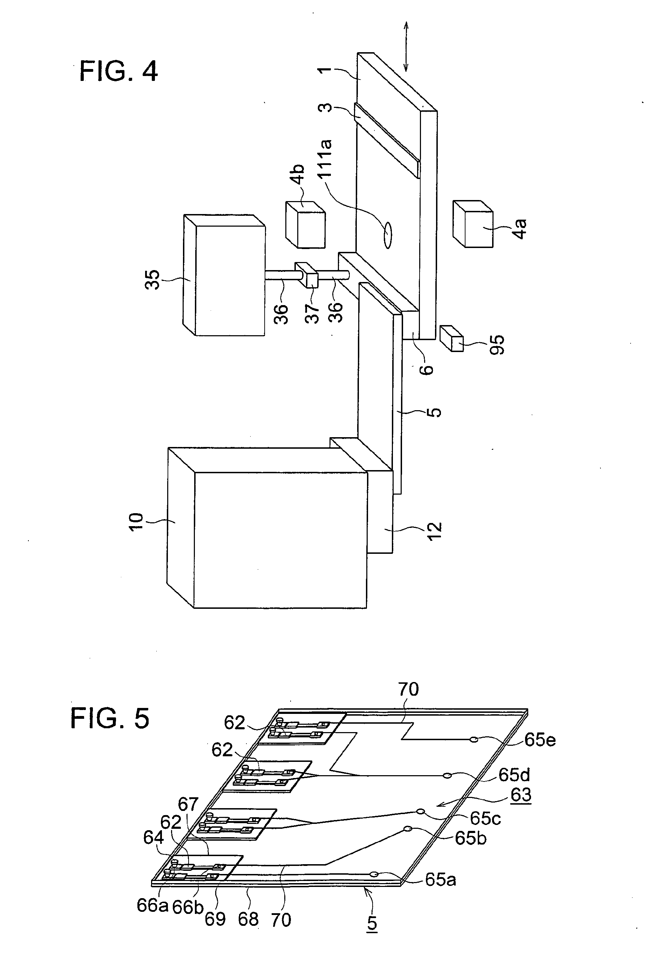

Figure 4 is an explanatory diagram showing an example of the internal construction of a reaction detection apparatus 80 according to a preferred embodiment of the present invention. The detection apparatus 80 is configured to have a temperature adjustment unit 3, an optical detection unit 4, a driving liquid pump 5, an air pump 35, a packing 6, and a driving liquid tank 10, etc. In the following, the constituent elements similar to the constituent elements described so far are assigned the same numbers and their explanations will be omitted.

Figure 4 is a condition in which the top surface of the microchip 1 is in close contact with the temperature adjustment unit 3 and the packing 6. The temperature adjustment unit 3 and the packing 6 are driven by driving members not shown in the figure and can be moved in the up-down direction with respect to the surface of the paper.

In the initial condition, the temperature adjustment unit 3 and the packing 6 are raised by the driving members by an amount more than the thickness of the microchip 1 from the condition shown in Figure 4. As a result, the microchip 1 can be inserted and withdrawn in the direction of the arrow in Figure 4, and the person in charge of testing inserts the microchip 1 through the insertion inlet 83 until it butts against a restricting member not shown in the figure. When the microchip 1 is inserted up to the prescribed position, a chip detection unit 95 issuing a photo interrupter, etc., turns ON when the microchip 1 is detected.

The temperature adjustment unit 3 has in it a Peltier device, a power supply unit, a temperature controller unit, etc., and is a unit that adjusts the top surface of the microchip 1 to a prescribed temperature by heating or heat absorption.

Next, the temperature adjustment unit 3 and the packing 6 are lowered by the driving members making the top surface of the microchip 1 come into close contact with the temperature adjustment unit 3 and the packing 6.

In the detection unit 111 of the microchip 1, the specimen under examination and the reacting substance that is stored inside said microchip 1 react with each other and cause, for example, color change, light emission, fluorescence, turbidization, etc. In the present preferred embodiment, the result of the reaction of the reagent occurring in the detection unit 111 is detected optically through the window 111a of the detection unit. The grooved substrate 108 and the covering substrate 109 forming the detection unit 111 of the microchip 1 that optically measures the result of the reaction with the reagent are made of a material that is transparent to light, and the result of the reaction between the reagent and the specimen under examination can be analyzed by measuring the light or by measuring the color of the light passing through the detection unit 111 of the microchip 1.

The optical detection unit 4 is comprised of a light emitting unit 4a and a light receiving unit 4b, and is placed so that it is possible to detect the light passing through the detection unit 111 of the microchip 1.

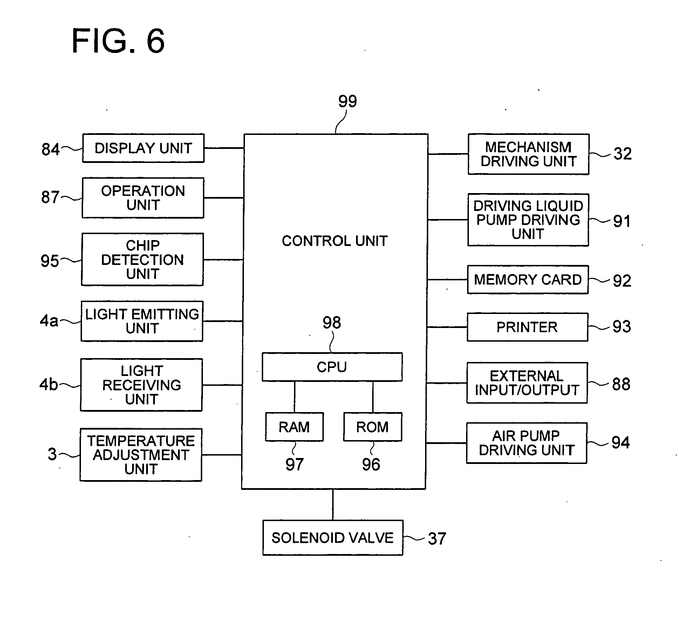

The air pump 35 is a pump that feeds a gas 40 such as air at a prescribed pressure, and the gas 40 blowing outlet is connected to the packing 6 by a hose 36 with a solenoid valve 37 in between. The gas blow outlet of the hose 36, the opening in the packing 6, and the gas injection unit 150 are connected with each other. The gas 40 fed from the hole connecting the packing 6 and the hose 36 is injected into the fine flow path 130a formed inside the microchip 1 via the connected gas injection unit 150 of the microchip 1. The solenoid valve 37 controls the ON and OFF of the supply of gas according to the commands from the control unit 99 (see Figure 6). In this manner, a gas 40 can be intermittently injected from the air pump 35 into the fine flow path 130a via the connected packing 6.

A suction inlet 12 is connected to the suction side of the driving liquid pump 5 so that it is possible to suck the driving liquid 11 stored in the driving liquid tank 10. On the other hand, a packing 6 is connected to the outlet side of the driving liquid pump 5, and the driving liquid 11 sucked in from the suction inlet 12 is injected into the fine flow path formed inside the microchip 1 from the driving liquid injection unit 110 of the microchip 1 via the packing 6. The packing 6 is clasped in between the driving liquid pump 5 and the microchip 1, the driving liquid outlet of the driving liquid pump 5, the opening of the packing 6, the driving liquid injection unit 110 are connected with each other. In this manner, the driving liquid 11 from the driving liquid pump 5 and passing through the packing 6 is injected from the driving liquid injection unit 110.

Next the driving liquid pump 5 is explained referring to Figure 5.

Figure 5 is an explanatory diagram showing an example of the construction of the driving liquid pump 5 according to a preferred embodiment of the present invention.

This driving liquid pump 5 is configured to have three substrates of a substrate 67 made of silicon, a glass substrate 68 on top of it, and another glass substrate 69 on top of that. The substrate 67 and the substrate 68 are anodic bonded, and the substrate 68 and substrate 69 are bonded together either by adhesive bonding or by fusion bonding.

A micro pump 62 (piezo pump) is formed in the internal space between the substrate 67 made of silicon and the glass substrate 68 which is fixed on top of it by anodic bonding. An example of the drive source of the micro pump 62 is a piezoelectric device, and the liquid is sent in the direction from left to right in Figure 5 by changing the volume of the internal pressure chamber.

The upstream side of the micro pump 62 is connected to the opening 64 provided in the glass substrate from the flow path provided in the substrate 67 via the penetrating hole 66a of the substrate 68. The opening 64 is connected to the driving liquid tank 10 via the suction inlet 12, so that the driving liquid 11 stored in the driving liquid tank 10 is sucked in.

A flow path 70 has been patterned in the substrate 69. As an example, the dimensions and shape of the flow path 70 are - a rectangular cross-section with a width of about 150 µm and a depth of about 300 µm. An opening 65 is provided on the downstream side of the flow path 70, and the liquid is fed by the micro pump 62 via the flow path 70. The packing 6 is provided with an opening matching with the position of the opening 65 when the driving liquid pump 5 and the packing 6 come into close contact with each other. Further, since openings are also provided in the packing 6 matching with the positions of the driving liquid injection unit 110 and the specimen under examination injection unit 113 when the packing 6 and the microchip 1 come into close contact with each other, it is possible to inject the driving liquid from each micro pump 62 to the driving liquid injection unit 110 and the specimen under examination injecting unit 113.

Figure 6 is a circuit block diagram of the reaction detection apparatus 80 according to a preferred embodiment of the present invention.

The control unit 99 is configured to have a CPU 98 (Central Processing Unit), a RAM (Random Access Memory) 97, a ROM (Read Only Memory) 96, etc., the programs stored in the ROM 96 which is a non-volatile type storage unit are read into the RAM 97, and different sections of the reaction detection apparatus 80 are centrally controlled in accordance with these programs.

In the following, the functional blocks having the same functions as those described so far are assigned the same numbers and their explanations are omitted.

The chip detection unit 95 transmits a detection signal to the CPU 98 when a microchip 1 butts against the restricting member. The driving liquid pump driving unit 91 is a driving unit that drives the different drive sources, for example, piezoelectric devices, inside the driving liquid pump 5. The air pump driving unit 94 is a drive circuit that drives the air pump 35 in accordance with the commands from the control unit 99. The memory card 92 is used for storing the test results, and the printer 93 is used for printing out the test results.

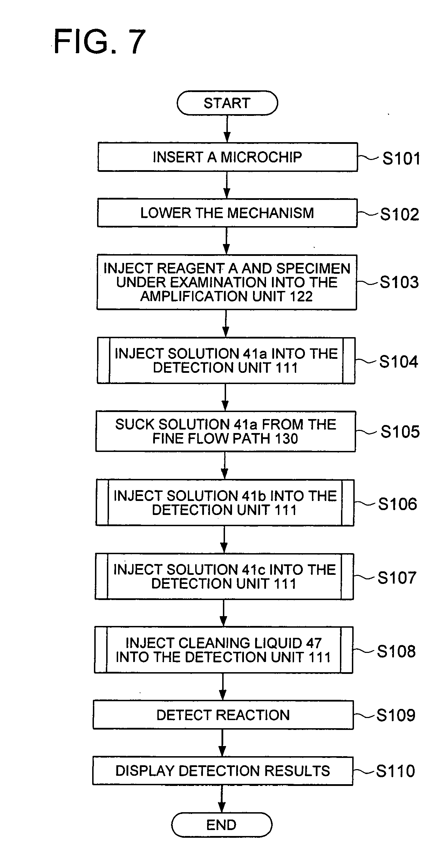

Figure 7 is a flow chart explaining the procedure for testing in the reaction detection apparatus 80 in a preferred embodiment of the present invention.

However, it is assumed that power is supplied to the temperature adjustment unit 3 at the time that the power supply to the reaction detection apparatus 80 is switched ON, and the prescribed temperature has been reached. Further, it is assumed that, before the testing, the driving liquid 11 has been filled up to the top end of the packing 6.

S101: This is the step of inserting the microchip 1.

The person in charge of testing inserts the microchip 1 into the insertion inlet 83 until it butts against a restricting member not shown in the figure (not in the figure).

S102: This is the step of lowering the mechanism.

When the microchip 1 inserted into the insertion inlet 83 butts against the restricting member, and the CPU 98 detects the detection signal from the chip detection unit 95, the control unit 99 controls the mechanism driving unit 32, and lowers until there is close contact with an appropriate pressure with the packing 6 and the temperature control unit 3.

S103: This is the step of injecting the reagent a and the specimen under examination into the amplification unit 122.

The control unit 99 commands the driving liquid pump driving unit 91, and successively injects prescribed quantities of the driving liquid 11 by driving the micro pump 62 connected with the driving liquid injection unit 110a and the micro pump connected with the driving liquid injection unit 110b. As was explained regarding Figure 2, because of the driving liquid 11, the reagent a and the specimen under examination are fed to the amplification unit 122 and react there.

S104: This is the step of injecting the solution 41a into the detection unit 111.

After a prescribed reaction time, the control unit 99 calls the intermittent injection subroutine, and alternatively injects the solution 41a that has the specimen under examination after reaction and gas 40 into the detection unit 111.

S105: This is the step of suctioning the solution 41a from the fine flow path 130.

The control unit 99 commands the driving liquid pump driving unit 91, and drives the micro pump 62 connected to the driving liquid injection unit 110a in the reverse direction, and recedes the driving liquid 11 up to the position shown in Figure 3(b).

S106: This is the step of injecting the solution 41b into the detection unit 111.

After a prescribed reaction time, the control unit 99 calls the intermittent injection subroutine, and alternatively injects the solution 41b that has the specimen under examination after reaction and gas 40 into the detection unit 111.

S107: This is the step of injecting the solution 41c into the detection unit 111.

After a prescribed reaction time, the control unit 99 calls the intermittent injection subroutine, and alternatively injects the solution 41c that has the specimen under examination after reaction and gas 40 into the detection unit 111.

S108: This is the step of injecting the cleaning liquid 47 into the detection unit 111.

After a prescribed reaction time, the control unit 99 calls the intermittent injection subroutine, and alternatively injects the cleaning liquid and gas 40 into the detection unit 111.

S109: This is the step of detecting the results of the reaction in the detection unit 111.

After a prescribed reaction time, the control unit 99 illuminates the detection unit 111 of the microchip 1 by making the light emitting unit 4a emit light, and obtains the measured light value by converting the input signal from the light receiving unit 4b that has received the transmitted light that has been transmitted through the detection unit 111 into a digital value using the A/D converter incorporated inside the CPU 98.

S110: This is the step of displaying the reaction results.

The control unit 99 carries out computation from the result of light measurement made by the optical detection unit 4, and displays the reaction results on the display unit 84.

This is the end of the testing procedure.

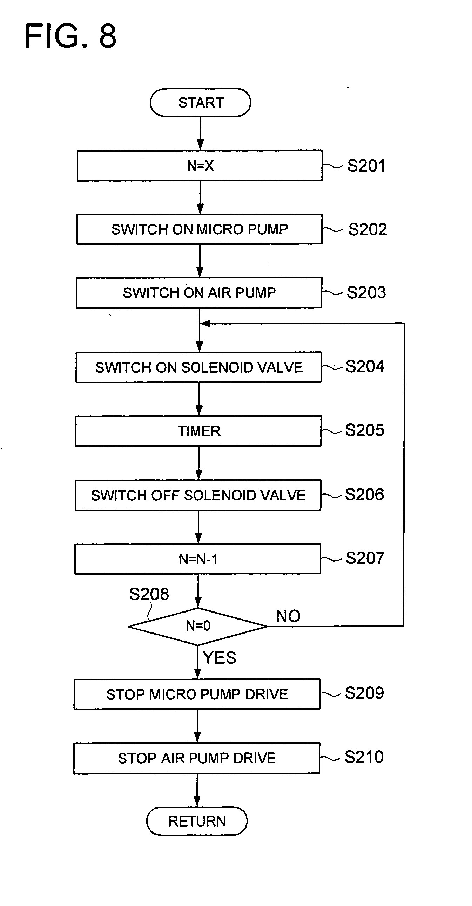

Next, referring to Figure 8, the procedure of the intermittent injection subroutine that causes the alternating injection of gas 40 and solution 41 into the detection unit 111 is explained here. Figure 8 is a flow chart of the intermittent injection subroutine.

S201: This is the step of setting the counter N that counts the number of times that the solenoid valve 37 is turned ON and OFF.

The control unit 99 sets the number X of times for turning ON and OFF specified by the main routine as the initial value in the counter N.

S202: This is the step of turning ON the micro pump 62.

The micro pump 62 specified by the main routine is turned ON by the control unit 99 which gives a command to the driving liquid pump driving unit 91.

S203: This is the step of turning ON the air pump 35.

The control unit 99 gives a command to the air pump driving unit 94 and turns ON the air pump 35.

S204: This is the step of turning ON the solenoid valve 37.

The control unit 99 transmits a control signal to the solenoid valve 37 and turns ON the solenoid valve 37.

S205: This is the step of waiting for a prescribed time.

The waiting is done while counting a timer inside the control unit 99. The time of the timer is the time at least until a quantity of gas 40 for pushing out the solution 41 injected into the detection unit 111 is injected into the detection unit 111.

S206: This is the step of turning OFF the solenoid valve 37.

The control unit 99 transmits a control signal to the solenoid valve 37 and turns OFF the solenoid valve 37.

S207: This is the step of decrementing N (making N=N-1).

The counter N is decremented to N-1.

S208: This is the step of judging whether N=0.

If N is not equal to 0 (NO in Step S208), the operation returns to Step S204.

If N is equal to 0 (YES in Step S208), the operation proceeds to Step S209.

S209: This is the step of stopping the micro pump 62.

The control unit 99 stops the micro pump 62 by giving a command to the micro pump driving unit 91.

S210: This is the step of stopping the air pump 35.

The control unit 99 stops the air pump 35 by giving a command to the air pump driving unit 94.

The above ends the subroutine and the program execution returns to the main routine.

As has been explained above, according to the present invention, it is possible to provide a microchip reaction detection system in which it is possible to speed up the progress of a reaction by making a solution flow efficiently with respect to the reacting substance supported on the wall of the flow path of the detection unit, and to provide a reaction method inside the flow path of the microchip.

## Claims

1. A microchip reaction detection system comprising:
a microchip comprising
a driving liquid injection unit into which a driving liquid for driving a solution is injected and
a detection unit on which a reacting substance is supported and in which the reaction between the reacting substance and the solution is detected;
a driving liquid pump for injecting the driving liquid into the driving liquid injection unit;
an air pump for injecting a gas into the detection unit; and
a control unit
for controlling the driving liquid pump so that the driving liquid can be injected into the driving liquid injection unit and controlling the air pump so that the gas can be injected into the detection unit intermittently of at least an amount effective for pushing away the solution injected into the detection unit while feeding the solution to the detection unit.

2. The microchip reaction detection system of Claim 1,
wherein the microchip has a flow path for injecting the gas which flow path joins a flow path for feeding the solution at the detection unit.

3. A method of reaction inside a flow path of a microchip,
wherein the reaction is carried out
by feeding a solution to a wall of a flow path which supports a reacting substance in the detection unit and
by contacting the reacting substance with the solution, and
wherein the solution and a gas of at least an amount effective for pushing out the solution injected into the detection unit are alternatively injected into the detection unit at the time of the reaction.

4. The method of reaction inside the flow path of the microchip of Claim 3,
wherein the reaction between the reacting substance and the solution is an avidin-biotin reaction.

5. The method of reaction inside the flow path of the microchip of Claim 3,
wherein the reaction between the reacting substance and the solution is a hybridization reaction.

6. The method of reaction inside the flow path of the microchip of Claim 3,
wherein the reaction between the reacting substance and the solution is an antigen antibody reaction.
